# EUROPÄISCHE PATENTANMELDUNG

(11) **EP 3 834 948 A1**
(43) Veröffentlichungstag der Anmeldung: **16.06.2021**
(21) Anmeldenummer: 19216102.4
(22) Anmeldetag: 13.12.2019
(51) Int. Cl.: B05B 11/00, B05C 17/005, B65B 3/16, B65D 83/00

(54) **VERFAHREN ZUR HERSTELLUNG EINER KARTUSCHE UND KARTUSCHE**

(71) Anmelder: Hilti Aktiengesellschaft, 9494 Schaan (LI)
(72) Erfinder: Willner, Ralf, 86874 Tussenhausen (DE); Ayrle, Thomas, 86853 Langerringen (DE); Donner, Tobias, 81379 München (DE); Tapov, Tihomir, 5300 Gabrovo (BG)
(74) Vertreter: Hilti Aktiengesellschaft Corporate Intellectual Property

(57) **Zusammenfassung**

Die vorliegende Erfindung betrifft eine Kartusche (10) für eine Auspressvorrichtung, mit zumindest einem nicht eigensteif ausgebildeten, länglichen Folienbeutel (18), der eine Kammer (20) zur Aufnahme einer Masse (102) und ein Kopfteil (12) zum Zusammenwirken mit dem Folienbeutel (18) aufweist, wobei der Folienbeutel (18) an einer dem Kopfteil (12) zugewandten Seite eine Öffnung aufweist, die von einer Abdeckung (14) verschlossen ist. Die Abdeckung (14) weist einen Sollbruchbereich (88) auf. Es wird weiterhin ein Verfahren zur Herstellung einer derartigen Kartusche (10) beschrieben.

## Beschreibung

Die vorliegende Erfindung betrifft ein Verfahren zur Herstellung einer Kartusche und eine Kartusche für eine Auspressvorrichtung und.

Kartuschen werden vor allem für die Lagerung von Material verwendet, wie Kleber, Dichtmasse, Mörtel, Farbe oder Schmierstoffe. Zudem lässt sich das Material über die Kartuschen auf ein Objekt leicht auftragen, sofern die Kartusche in eine entsprechende Auspressvorrichtung eingesetzt ist. Mittels der Auspressvorrichtung kann das Material exakt aufgetragen werden. Beispielsweise drückt eine Stange der Auspressvorrichtung gegen einen Boden der Kartusche, wodurch das Volumen der Kartusche komprimiert wird, sodass das in der Kartusche befindliche Material aus einer Öffnung gedrückt wird. Es wird ein Aufsatz bzw. ein Kopfteil auf der Kartusche angebracht, um das Material kontrolliert und exakt auf das Objekt auftragen zu können.

Aus der Praxis sind Kartuschen bekannt, die mit einem nicht eigensteif ausgebildeten Folienbeutel und einem eigensteifen Einsatz ausgeführt sind. Der Folienbeutel weist eine zylindrische Wand und ein Bodenteil auf, wobei der Einsatz an einem dem Bodenteil abgewandten Ende mit dem Folienbeutel verbunden ist. Der Einsatz ist ringförmig ausgeführt und weist eine mit einer Abdeckung verschlossene kreisförmigen Öffnung auf, durch die die Kammer mit dem Material befüllbar ist. Die Abdeckung wird in einem Schweißverfahren mit dem Einsatz verbunden. Der Einsatz wird in einem folgenden Schritt in einem Klebeverfahren mit dem Kopfteil verbunden.

Eine Herstellung einer derartigen Kartusche ist allerdings nachteilhaft aufwändig.

Es ist die Aufgabe der Erfindung ein Verfahren zur Herstellung einer Kartusche zur Verfügung zu stellen, mittels dem die Kartusche einfach herstellbar ist. Weiterhin ist es Aufgabe der Erfindung eine einfach herstellbare Kartusche zur Verfügung zu stellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Es wird ein Verfahren zur Herstellung einer Kartusche für eine Auspressvorrichtung mittels der folgenden Schritte vorgeschlagen:
- Bereitstellen eines eine Kammer aufweisenden Folienbeutels mit einer Öffnung, eines Kopfteils und eines eigensteifen Einsatzes mit einem Durchgang,
- Verbinden des Einsatzes mit dem Folienbeutel,
- Befüllen der Kammer mit einer Masse durch den Durchgang,
- Verschließen des Durchgangs mit einer Abdeckung.

Erfindungsgemäß ist vorgesehen, dass der Einsatz mit dem Kopfteil in einem Schweißvorgang verbunden wird, wobei der Schweißvorgang durch einen Wärmeeintrag in die Abdeckung durchgeführt wird.

Durch ein erfindungsgemäßes Verfahren ist eine Kartusche einfach und kostengünstig herstellbar, da das Kopfteil auf konstruktiv einfache Weise mittels einer Schweißeinrichtung an dem Einsatz anbindbar ist. Eine hierbei erzielte Verbindung des Einsatzes mit dem Kopfteil ist besonders sicher und stabil ausführbar, so dass eine Beschädigung oder Leckage in diesem Bereich sicher unterbunden ist. Der Einsatz und das Kopfteil weisen in einander zugewandten Bereichen insbesondere eine jeweils zusammenwirkende und im Wesentlichen gegengleich ausgeführte Kontur auf, wobei die in dem Bereich der Konturen angeordnete Abdeckung schweißbar ausgeführt ist. Auf diese Weise kann bei der Anbindung des Kopfteils an den Einsatz vorzugsweise im gleichen Schritt auch die Abdeckung an dem Einsatz angebunden werden.

Das Kopfteil ermöglicht das Einsetzen der Kartusche in handelsübliche Auspressvorrichtungen, wodurch die Kartusche kontrolliert ausgedrückt werden kann, wenn die in der Kammer befindliche Masse auf ein entsprechendes Objekt aufgetragen wird.

Bei einer einfachen und kostengünstigen Ausführungsform eines Verfahrens nach der Erfindung wird der Einsatz in einem Induktionsschweißvorgang an das Kopfteil angebunden. Die Anbindung des Kopfteils an den Einsatz wird hierbei vorzugsweise kontaktlos, beispielsweise in einem Hochfrequenzschweißverfahren hergestellt.

Vorzugsweise wird ein Schweißwerkzeug zur Durchführung des Schweißvorgangs von einer dem Kopfteil abgewandten Seite des Folienbeutels über den Folienbeutel in Richtung des Einsatzes und des Kopfteils geführt. Das Schweißwerkzeug umgreift den Folienbeutel und die entsprechenden Konturen des Einsatzes und des Kopfteils vorzugsweise von außen.

Bei einer vorteilhaften Ausführungsform eines erfindungsgemäßen Verfahrens ist es vorgesehen, dass das Schweißwerkzeug um einen einzigen Folienbeutel zur Anbindung des diesem Folienbeutel zugeordneten Einsatzes an dem Kopfteil geführt wird. Hierbei wird insbesondere in einem ersten Schritt zunächst ein Folienbeutel über den Einsatz an das Kopfteil angebunden und gegebenenfalls in einem zweiten Schritt ein zweiter Folienbeutel über den Einsatz an das Kopfteil angebunden. Hierdurch können die einzelnen Folienbeutel mittels unterschiedlicher, individuell angepasster Schweißparameter angebunden werden. Dies ist insbesondere vorteilhaft, wenn verschieden ausgeführte Abdeckungen für die einzelnen Folienbeutel eingesetzt werden.

Bei einer schnell und kostengünstig durchführbaren Ausführungsform des erfindungsgemäßen Verfahrens wird das Schweißwerkzeug um wenigstens zwei Folienbeutel gemeinsam zur Anbindung der den beiden Folienbeuteln zugeordneten Einsätzen an dem Kopfteil geführt. Wenn ein Zwischenraum zwischen den beiden Kammern nicht verschweißt wird, eignet sich dieses Verfahren insbesondere bei einem Einsatz von höher viskosen Füllmedien. Es ist allerdings auch möglich, dass der Zwischenraum zwischen den beiden Kammern verschweißt wird.

Bei einer vorteilhaften Ausführungsform eines Verfahrens nach der Erfindung wird im Bereich der Abdeckung ein definierter Sollbruchbereich hergestellt. Der Sollbruchbereich der Abdeckung kann dabei beispielsweise vor der Herstellung des Folienbeutels, nach der Herstellung des Folienbeutels oder während der Herstellung des Folienbeutels hergestellt werden. Vorzugsweise wird der Sollbruchbereich erst nach einer Einfüllung der Masse in die Kammer und dem Verschließen der Kammer durch die Abdeckung in die Abdeckung eingebracht. Insofern wird beispielsweise Material der Abdeckung von einer der Kammer abgewandten Außenseite abgetragen, um den Sollbruchbereich auszubilden. Der Sollbruchbereich kann aber auch vor dem Anbringen der Abdeckung auf der Kammer hergestellt werden. Hiermit ergibt sich auch die Möglichkeit den Sollbruchbereich an einer der Kammer zugewandten Unterseite der Abdeckung auszubilden oder zwei sich gegenüberliegende Sollbruchbereiche an der Unter- und Oberseite auszubilden.

Bei einer vorteilhaften Ausführungsform eines Verfahrens nach der Erfindung ist es vorgesehen, dass der Folienbeutel einen Folienschlauch und einen Bodenteil aufweist, wobei der Folienschlauch vorzugsweise durch Schweißen oder Kleben gebildet wird.

Bei einer vorteilhaften Ausführungsform eines Verfahrens nach der Erfindung ist es vorgesehen, dass der Sollbruchbereich der Abdeckung mittels eines Lasers, einer Materialschwächung durch Heißprägen bzw. durch ein thermisches Prägen mit einem beheizten Stempel, durch ein Anritzen mit einem geeigneten Schneidwerkzeug bzw. Messer oder während eines Anschweißvorgangs der Abdeckung an den Einsatz hergestellt ist. Hierdurch kann auf einfache Weise erzielt werden, dass der Sollbruchbereich insbesondere mit einer anderen Materialstärke und/oder Festigkeit als weitere Bereiche der Abdeckung aufweisen und hierdurch ein definierter Sollbruchbereich gebildet ist.

Bei der Herstellung des Sollbruchbereichs während des Anschweißvorgangs der Abdeckung an den Einsatz wird zur Erzielung des Sollbruchbereichs vorzugsweise wenigstens ein Schweißparameter gegenüber der Anbindung der Abdeckung an den Einsatz in weiteren Bereichen variiert und beispielsweise ein höherer Druck, eine erhöhte Temperatur oder eine verlängerte Schweißdauer oder eine Kombination dieser Parameter verwendet. Der Sollbruchbereich entsteht hierbei in unmittelbarer Nachbarschaft zur Schweißnaht oder in der Schweißnaht selbst.

Bei einer vorteilhaften Ausführungsform eines Verfahrens nach der Erfindung ist es vorgesehen, dass der Einsatz zumindest einen Materialfortsatz, insbesondere einen den Durchgang umgebenen Materialfortsatz hat, der während des Verschließens des Durchgangs schmilzt. Die Dichtigkeit wird hierdurch verbessert, da eine stoffschlüssige Verbindung des Einsatzes mit der Abdeckung aufgrund der Schmelze sichergestellt werden kann. Der Materialfortsatz kann den Durchgang des Einsatzes umgeben. Er fungiert als Sollschmelzstelle des Einsatzes, sodass eine qualitativ hochwertige Abdeckung bereitgestellt wird und keine Masse aus der Kammer durch die Öffnung entweichen kann.

Außerdem kann bei einer vorteilhaften Ausführungsform eines Verfahrens nach der Erfindung vorgesehen sein, dass ein zweiter Folienbeutel mit Kammer bereitgestellt wird. Der zweite Folienbeutel kann in analoger Weise zum ersten Folienbeutel ausgebildet sein und mit dem Kopfteil verbunden werden. Die Verbindung wird vorzugsweise mittels Klebens oder Schweißens durchgeführt. Demnach kann in einfacher Art und Weise eine Mehrkomponentenverpackung bzw. - kartusche hergestellt werden.

Es kann vorgesehen sein, dass für die verschiedenen Kammern eine unterschiedliche Abdeckung vorgesehen ist.

Um ein möglichst synchrones Öffnen der Kammern während des Auspressvorgangs der Kartusche sicherstellen zu können, können die Abdeckungen der verschiedenen Kammern mit verschieden ausgeführten Sollbruchbereichen, beispielsweise unterschiedlichen Einkerbungen, ausgeführt sein.

Es wird weiterhin eine Kartusche für eine Auspressvorrichtung hergestellt mit einem derartigen Verfahren vorgeschlagen, wobei die Kartusche mit zumindest einem nicht eigensteif ausgebildeten, länglichen Folienbeutel, der eine Kammer zur Aufnahme einer Masse aufweist, mit einem Kopfteil zum Zusammenwirken mit dem Folienbeutel und mit einem eigensteif ausgeführten Einsatz, ausgeführt ist, wobei der Einsatz auf einer dem Kopfteil zugewandten Seite mit dem Folienbeutel verbunden ist und einen von einer Abdeckung verschlossenen Durchgang aufweist.

Erfindungsgemäß ist vorgesehen, dass der Einsatz und das Kopfteil in einander zugewandten Bereichen eine jeweils zusammenwirkende und im Wesentlichen gegengleich ausgeführte Kontur aufweisen, wobei die in dem Bereich der Konturen angeordnete Abdeckung schweißbar ausgeführt ist.

Die im Zusammenhang mit dem vorgeschlagenen Verfahren zum Herstellen der Kartusche beschriebenen technischen Vorteile gelten für eine erfindungsgemäß ausgeführte Kartusche analog. Eine erfindungsgemäß ausgeführte Kartusche ist somit vorteilhaft einfach herstellbar, wobei die Abdeckung vorzugsweise nicht nur in einem Schweißverfahren an dem Einsatz, sondern der Einsatz mittels der Abdeckung alternativ oder zusätzlich hierzu auch mittels eines Schweißverfahrens an dem Kopfteil anbindbar ist. Ein hierzu vorgesehenes Schweißwerkzeug weist vorzugsweise eine dem Folienbeutel im wesentlichen entsprechende zylinderförmige Ausnehmung auf und ist von einer dem Kopfteil abgewandten Seite um den Folienbeutel in Richtung des Einsatzes führbar, wobei das Schweißwerkzeug dazu ausgeführt ist, die Abdeckung zumindest im Bereich der Konturen des Einsatzes und des Kopfteils derart zu erhitzen, dass der Einsatz mittels der Abdeckung mit dem Kopfteil verschweißbar ist. Das Schweißwerkzeug umgreift den jeweiligen Folienbeutel dabei vorzugsweise außenseitig.

Unter einem "eigensteifen Bauteil" wird ein Bauteil verstanden, welches seine Form beibehält, falls es aus einer Vorrichtung entnommen wird. Ein solches Bauteil wird auch als eigenstabil bezeichnet.

Bei einer vorteilhaften Ausführung einer erfindungsgemäßen Kartusche ist es vorgesehen, dass die Kontur des Einsatzes und des Kopfteils jeweils zwei in einem Winkel zueinander angeordnete Flächen aufweisen. Die Stabilität einer Verbindung zwischen dem Einsatz und dem Kopfteil ist hierbei vorteilhaft groß.

Besonders stabil ist die Verbindung zwischen dem Einsatz und dem Kopfteil durch günstige vorliegende Kraftverhältnisse, wenn die Flächen des Einsatzes und des Kopfteils im Wesentlichen senkrecht zueinander angeordnet sind.

Ebenso kann die Abdeckung an zumindest zwei beispielsweise im Wesentlichen senkrecht zueinanderstehenden Flächen der stufenförmig abgesetzten Erhebung anliegen. Somit kann auch die Abdeckung an der Unterseite stabil an dem Einsatz und an der Oberseite in der Aufnahme des Kopfteils befestigt werden. Ferner ist auch hierdurch die Leckage verringert.

Eine stabile Anbindung des Kopfteils an den Einsatz ist erzielbar, wenn der Einsatz an seiner dem Kopfteil zugewandten Seite eine stufenförmig abgesetzte Erhebung hat, über die der Einsatz in einer Aufnahme des Kopfteils, welches zur Anordnung des Einsatzes vorgesehen ist, aufgenommen ist. Es kann vorgesehen sein, dass die stufenförmig abgesetzte Erhebung des Einsatzes vom Folienbeutel übersteht. Die Erhebung ermöglicht eine stabile Aufnahme des Einsatzes in der Aufnahme des Kopfteils. Zudem verbessert sich hierdurch die Dichtigkeit im Betrieb.

Bei einer vorteilhaften Ausführung der Erfindung ist es vorgesehen, dass die Abdeckung einen Sollbruchbereich aufweist. Hierdurch ist eine einfach handzuhabende Abdeckung bereitgestellt. Dabei verschließt die Abdeckung einerseits den Folienbeutel sicher und verhindert eine ungewollte Leckage aus der in der Kammer befindlichen Masse aus der Kammer. Andererseits ermöglicht die Abdeckung eine einfache und sichere und insbesondere definierte Öffnung, um die in der Kammer befindliche Masse abgeben zu können. Durch den Sollbruchbereich sind die Öffnungseigenschaften insbesondere bei in einer Auspressvorrichtung eingesetzten Kartusche verbessert.

Durch den Sollbruchbereich in der Abdeckung kann die Kartusche in einer Auspressvorrichtung mit vergleichsweise geringen Kräften insbesondere definiert geöffnet werden. Gleichzeitig ist die Abdeckung auf einfache Weise derart stabil ausführbar, dass eine Selbstöffnung der Kartusche beispielsweise bei einem versehentlichen Herunterfallen sicher verhindert wird. Mittels der Abdeckung ist weiterhin eine Leckage der in der Kartusche befindlichen Masse auf einfache Weise sehr gering oder vollständig unterbindbar und insbesondere im Vergleich zu bekannten Kartuschen signifikant reduziert.

Die Abdeckung ist dabei insbesondere als Folie ausgeführt, kann alternativ hierzu beispielsweise auch plattenförmig ausgeführt sein und beispielsweise eine Kunststoffplatte darstellen.

Der Sollbruchbereich kann dabei auf einfache Weise eine beliebige Form aufweisen und je nach Anwendungsfall beispielsweise rund, oval, quadratisch, rechteckig, eckig oder linienförmig ausgeführt sein oder eine Kombination aus diesen Formen aufweisen.

Bei einer vorteilhaften Ausführungsform einer erfindungsgemäßen Kartusche ist vorgesehen, dass die Abdeckung in dem Sollbruchbereich zumindest bereichsweise, insbesondere in einem gesamten flächigen Bereich, eine definierte Materialunstetigkeit aufweist als in einem weiteren Bereich der Abdeckung. Die Abdeckung ist hierbei konstruktiv einfach ausgeführt und kostengünstig herstellbar, wobei ein sicheres und definiertes Öffnen der Abdeckung im Sollbruchbereich ermöglicht ist. Die definierte Materialunstetigkeit kann beispielsweise dadurch gebildet sein, dass die Abdeckung in dem Sollbruchbereich zumindest bereichsweise eine vergrößerte oder eine verminderte Materialstärke aufweist als in einem weiteren Bereich der Abdeckung. Hierdurch wird ein sicheres und definiertes Öffnen der Abdeckung im Sollbruchbereich ermöglicht. Eine derartige Abdeckung ist zudem einfach und kostengünstig herstellbar.

Der Sollbruchbereich der Abdeckung kann auch eine definiert andere Materialfestigkeit als ein weiterer Bereich der Abdeckung aufweisen. Auch hierdurch wird ein sicheres und definiertes Öffnen der Abdeckung im Sollbruchbereich ermöglicht.

Als weiterer Bereich der Abdeckung wird hier ein Bereich der Abdeckung verstanden, der nicht dem Sollbruchbereich zugeordnet ist und sich außerhalb des definierten Sollbruchbereichs erstreckt. In dem weiteren Bereich der Abdeckung liegen vorzugsweise im Wesentlichen konstante Materialeigenschaften vor.

Bei einer vorteilhaften und besonders kostengünstig herstellbaren Ausführung einer Kartusche nach der Erfindung ist der Sollbruchbereich der Abdeckung von einer linienförmigen Materialschwächung begrenzt. Die linienförmige Materialschwächung umfasst den Sollbruchbereich insbesondere vollständig und trennt den Sollbruchbereich somit von dem weiteren Bereich der Abdeckung ab. Die linienförmige Materialschwächung kann dabei sowohl eine durchgängige insbesondere gleichmäßige Materialschwächung als auch eine Perforierung sein, wobei die Materialstärke oder die Materialfestigkeit der linienförmigen Materialschwächung sowohl geringer als auch größer als die Materialstärke des weiteren Bereichs der Abdeckung sein kann.

Um eine definierte Öffnung der Abdeckung im Gebrauchszustand erzielen zu können, ist es bei einer vorteilhaften Ausführung der Erfindung vorgesehen, dass der Sollbruchbereich der Abdeckung eine definiert andere Materialfestigkeit als ein weiterer Bereich der Abdeckung aufweist. Es kann in dem Sollbruchbereich vollständig oder in einem den Sollbruchbereich linienförmig umfassenden Bereich eine andere Festigkeit oder eine andere Gefügestruktur als in dem weiteren Bereich der Abdeckung vorgesehen sein. Dies kann beispielsweise durch Temperatureinwirkung insbesondere mittels Laser oder energetischer Strahlung erzielt werden.

Der Sollbruchbereich der Abdeckung kann bevorzugt eine Einkerbung aufweisen, die sternförmig, kreuzförmig, strichartig, kreisförmig, halbkreisförmig oder dergleichen ausgebildet ist. Die spezielle Geometrie der Einkerbung ermöglicht eine Anpassung des zum Öffnen der Kartusche nötigen Drucks. Darüber hinaus kann über die Form und die räumliche Anordnung der Einkerbung die Öffnungscharakteristik beeinflusst werden.

Bei einer vorteilhaften Ausführung der Erfindung ist der Einsatz auf einer dem Kopfteil zugewandten Seite konusförmig ausgeführt. Hierdurch ist auf konstruktiv einfache Weise eine Kartusche bereitstellbar, bei der eine mit dem Einsatz verbundene Abdeckung unter sämtlichen Bedingungen einfach und sicher an dem Einsatz befestigbar ist und sicher an dem Einsatz hält. Weiterhin ist eine unerwünschte Abschälung bzw. Abscherung und/oder Beschädigung der beispielsweise als Folie ausgeführten Abdeckung aufgrund der günstigen Krafteinleitung hierdurch sicher verhin-dert. Durch die konusförmige Ausführung des Einsatzes kann erreicht werden, dass im Falle eines Druckanstiegs in der Kammer vor dem Öffnen eine Kerbwirkung im Anbindungsbereich der Abdeckung an den Einsatz gering ist und die Abdeckung bei einer Ausdehnung der Abde-ckung bzw. der Folie durch eine Druckeinbringung bei einem Auspressvorgang zuverlässig im Bereich Sollbruchstelle geöffnet wird.

Als besonders vorteilhaft hat es sich herausgestellt, wenn eine dem Kopfteil zugewandte Oberfläche des Einsatzes einen Winkel zwischen 10° und 50° mit einer senkrecht zu einer Mittelachse des Folienbeutels angeordneten Horizontalen einschließt, wobei ein der Mittelachse zugewandter Bereich der Oberfläche einen größeren Abstand zu einem Bodenteil des Folienbeutels aufweist als ein der Mittelachse abgewandter Bereich der Oberfläche. Besonders bevorzugt weist der Winkel einen Wert zwischen 15° und 35°, insbesondere etwa 25°, auf.

Um einen Befüllvorgang des Folienbeutels besonders schnell durchführen zu können und ein Entweichen des in dem Folienbeutel vorhandener Luft sicher zu ermöglichen, kann der Einsatz zumindest eine von dem Durchgang unabhängige Entlüftungsöffnung und/oder zumindest einen von dem Durchgang unabhängigen Entlüftungsschlitz aufweisen. Der Durchgang ist hierbei insbesondere kreisförmig ausgeführt und liegt bei einem Befüllvorgang des Folienbeutels vorzugsweise zumindest annähernd dicht an einem Füllrohr einer Füllvorrichtung an. Durch die Entlüftungsöffnung und/oder den Entlüftungsschlitz kann in der Kammer des Folienbeutels befindliche Luft auf einfache Weise entweichen. Die Entlüftungsöffnung und/oder der Entlüftungsschlitz können nach dem Befüllvorgang von der Abdeckung insbesondere dichtend verschlossen werden, so dass in der Kammer befindliche Masse dichtend eingeschlossen ist.

Alternativ oder zusätzlich hierzu kann der Durchgang des Einsatzes in einem der Mittelachse des Folienbeutels zugewandten Bereich zumindest eine Entlüftungseinkerbung aufweisen, so dass bei einem Befüllvorgang des Folienbeutels mit einer Füllvorrichtung, die ein mit einem kreisförmigen Querschnitt ausgeführtes Füllrohr aufweist, in der Kammer des Folienbeutels befindliche Luft durch die Entlüftungseinkerbungen direkt entlang des Füllrohrs entweichen kann.

Sowohl das Vorsehen der Entlüftungsöffnung bzw. des Entlüftungsschlitzes als auch das Vorsehen von Entlüftungseinkerbungen verhindert das Auftreten von hohen Drücken bei einem Befüllvorgang, wodurch der Befüllvorgang kostengünstig durchführbar ist.

Vorzugsweise sind mehrere Entlüftungsöffnungen und/oder Entlüftungsschlitze vorgesehen, die insbesondere umfangsseitig gleichmäßig verteilt an dem Einsatz angeordnet sind.

Bei einer konstruktiv einfach herzustellenden Ausführung der Erfindung weisen die Entlüftungsöffnungen einen im Wesentlichen kreisförmigen Querschnitt auf. Die Entlüftungsschlitze sind bevorzugt im Wesentlichen konzentrisch zu einer Mittelachse des Einsatzes angeordnet.

Die Entlüftungseinkerbungen können eine im Wesentlichen eine rechteckige, dreieckige, gebogene oder vergleichbar ausgeführte Form aufweisen.

Vorzugsweise kann der Folienbeutel durch einen zylindrischen Folienschlauch gebildet sein, der bodenseitig durch ein Bodenteil verschlossen ist, wobei das Bodenteil mit dem Folienschlauch insbesondere verklebt und/oder verschweißt ist. Der Folienschlauch, auch Schlauchfolie bzw. Blasfolie genannt, kann aus einem thermoplastischen Material gebildet sein, wobei der Folienschlauch extrudiert oder an seiner Längsnaht geschweißt oder geklebt sein kann. Da das Bodenteil insbesondere verklebt und/oder verschweißt wird, ergibt sich eine stoffschlüssige Verbindung, wodurch die Lagerungseigenschaften der Kartusche verbessert sind, sodass eine Leckagerate der Kartusche im Vergleich zu einer Kartusche, bei der ein Folienbeutel durch einen Clipverschluß verschlossen ist, verringert ist.

Das Kopfteil der Kartusche stellt eine Art Adapter dar, da das Kopfteil ermöglicht, dass handelsübliche Aufsätze bzw. standardisierte Auspressvorrichtungen zum Auftragen der in der Kartusche befindlichen Masse verwendet werden können. Der gegebenenfalls teilweise über den Folienbeutel hinausstehende Einsatz stellt somit eine Schnittstelle zum Kopfteil dar.

In einer Ausführungsform weist das Kopfteil einen mit der Aufnahme in Fluidverbindung stehenden Austrittsstutzen auf. Der Austrittsstutzen kann die Strömungsrate definieren, insbesondere über seinen Durchmesser.

Es kann vorgesehen sein, dass der Austrittsstutzen ein Gewinde hat. Durch das Gewinde können handelsübliche Aufsätze bzw. Auspressvorrichtungen zum Auftragen der in der Kartusche befindlichen Masse exakt an einer Austrittsöffnung des Austrittsstutzens befestigt werden, sodass eine exakte Positionierung und Dosierung der Masse während des Auftragens ermöglicht wird.

Ebenso kann der Austrittsstutzen eine Trennwand haben, die das Volumen in zwei oder mehr Austrittskanäle unterteilt. Die relative Lage der Trennwand im Austrittsstutzen definiert die Querschnitte der Austrittskanäle und somit die Durchflussmengen durch diese Austrittskanäle.

Die Austrittskanäle können einen unterschiedlichen Durchmesser haben. Die Austrittskanäle können coaxial zueinander orientiert sein.

Das Kopfteil kann somit zur Aufnahme von mehreren Folienbeuteln geeignet sein, die unterschiedliche Massen aufweisen können. Das Kopfteil trennt die unterschiedlichen Massen bis zur Austrittsöffnung, sodass die unterschiedlichen Massen erst nach der Austrittsöffnung in Verbindung treten können. Dies ist beispielsweise bei Zweikomponenten-Klebstoffen von Bedeutung.

Die Kartusche kann somit unterschiedliche Massen aufnehmen und als Mehrkomponentenverpackung dienen. Die unterschiedlichen Durchmesser der Austrittsöffnungen ermöglichen, dass ein spezielles Mischverhältnis der unterschiedlichen Massen eingestellt werden kann.

Die in der Kartusche befindlichen Massen können eine chemische Masse oder eine Flüssigkeit sein, beispielsweise Komponenten eines Zweikomponenten-Gemisches.

Es lassen sich so unter anderem Dichtmassen, Mehrkomponentenmörtel, Mehrkomponentenbeschichtungsmassen, Mehrkomponentenfarben, Mehrkomponentenschaumvorprodukte, Mehrkomponentenklebstoffe, Mehrkomponentendichtmassen und Mehrkomponentenschmierstoffe in den entsprechenden Kartuschen lagern.

Der Aufnahme des Kopfteils kann ein Ausbreitungsraum zugeordnet sein, in den sich die Abdeckung ausbreiten kann. Der Ausbreitungsraum ermöglicht ein kontrolliertes Öffnen der Abdeckung, sodass diese die Strömung der ausströmenden Masse nicht behindert. Einerseits ergibt sich hierdurch eine laminare Strömung, da keine Hindernisse im Strömungsweg sind, die eine turbulente Strömung zur Folge haben könnten. Andererseits wird so sichergestellt, dass die Strömungsmenge exakt eingehalten wird, die für das Mischungsverhältnis von zwei oder mehr Komponenten von Bedeutung ist.

In einer Ausgestaltung ist der Durchgang konisch zulaufend. Hierdurch wirkt der Durchgang beim Ausströmen der Masse wie ein Konfusor bzw. eine Düse. Ebenso kann der konisch zulaufende Durchgang als Diffusor beim Befüllen des Folienbeutels wirken.

Der Durchgang kann insbesondere an einen Füllkegel der in der Kammer befindlichen Masse angepasst sein. Dies ermöglicht eine optimale Befüllung der Kammer mit einer Masse, sodass wenig bis keine Luft mehr in der Kammer vorhanden ist.

In einer Ausführungsform weist die Kartusche zumindest einen zweiten nicht eigensteif ausgebildeten, länglichen Folienbeutel mit einer Kammer zur Aufnahme einer Masse auf. Die Kartusche kann somit als Mehrkomponentenverpackung benutzt werden. Damit kann ein Harz, beispielsweise ein Epoxidharz, und ein Härter für einen Zweikomponenten-Klebstoff in derselben Verpackung gelagert werden.

Der zweite Folienbeutel kann die gleiche Länge wie der erste Folienbeutel haben, wobei in diesem Fall ein Verhältnis der Grundflächen der Folienbeutel ein zu erzielendes Mischverhältnis bestimmt. Alternativ hierzu kann es auch vorgesehen sein, dass zwei Folienbeutel eingesetzt werden, die eine voneinander abweichende Länge aufweisen.

Das Bodenteil kann aus einem Kunststoff, wie zum Beispiel Polyethylen (PE), Polypropylen (PP), Polyethylenterephthalat (PET), Polybutylenterephthalat (PBT), und/oder AcrylnitrilButadien-Styrol-Copolymer (ABS) sein. Es kann vorgesehen sein, dass das Bodenteil durch Spritzguss, 3D-Druck oder spanend gefertigt ist. Es kann auch aus einer vorgeformten Mono- oder Mehrschichtfolie bestehen. Es kann sein, dass das Bodenteil aus demselben oder einem vergleichbaren Material wie die Abdeckung gebildet ist. Dies ermöglicht eine kostengünstige Fertigung des Bodenteils.

Der Folienbeutel kann eine Mono- oder Mehrschichtfolie umfassen. Die gesamte Schichtdicke beträgt 50 bis 350 µm, insbesondere 80 bis 150 µm. Die eingesetzten Materialien können PE, PP, PET, Aluminium, Ethylen-Vinylalkohol-Copolymer (EVOH), Polyamide (PA), und/oder Polylactide (PLA) sein. Für jede Schicht kann zudem eine Beschichtung mit Siliziumoxid oder Aluminiumoxid vorgesehen sein. Die Mehrschichtfolie kann durch Kleber- oder Extrusionskaschierung hergestellt werden.

Der Folienbeutel ist vorzugsweise während eines Auspressvorgangs, ähnlich einer Ziehharmonika, gleichmäßig zusammenfaltbar, sodass möglichst die gesamte in der Kammer befindliche Masse verwendet werden kann. In Benutzung ist der Folienbeutel chemischen Massen oder Flüssigkeiten ausgesetzt, die mitunter den Folienbeutel angreifen können. Eine exakte Zusammensetzung des Folienbeutels muss somit mitunter an die in der Kammer befindliche Masse oder an die in der Kammer befindliche Flüssigkeit angepasst werden, insbesondere an die entsprechenden Stoffeigenschaften.

Die Abdeckung kann bevorzugt als Mehrschichtfolie ausgeführt sein.

Beispielsweise weist die Abdeckung an der Ober- und Unterseite eine PE und/oder eine PP Schicht auf, um mit anderen Kunststoffteilen der Kartusche verschweißt, beispielsweise thermisch verschweißt, werden zu können. Die Folie kann auch Schichten aus PVC aufweisen, insbesondere, wenn andere Kunststoffteile der Kartusche aus PVC bestehen.

Zwischen einer Oberseite und einer Unterseite der Abdeckung kann eine Sperrschicht vorgesehen sein, die beispielsweise das Eindringen von Sauerstoff oder Wasserdampf in die Kammer nach dem Abschließen durch die Abdeckung verhindert. Ebenso kann hierdurch ein Ausgasen der in der Kammer befindlichen Masse sicher verhindert werden.

Die Gesamtdicke der Abdeckung kann zwischen 50 µm und 350 µm betragen. Insbesondere ist vorgesehen, dass die Gesamtdicke zwischen 130 µm und 250 µm beträgt.

Die Sperrschicht kann beispielsweise Aluminium oder Beschichtungen von Siliziumoxid und/oder Aluminiumoxid auf PET, bi-axial angeordnetes PP (BOPP), PA, PLA, oder Ethylen-Vinylalkohol-Copolymer (EVOH) umfassen.

Für chemisch aktive Massen, d. h. anspruchsvolle Füllgüter, werden Mehrschichtfolien bevorzugt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: einen Längsschnitt durch eine erfindungsgemäße Kartusche in einer ersten Ausführungsform in Explosionsdarstellung;
- Fig. 2a: eine Detailansicht des Einsatzes aus Fig. 1 mit einer als Folie ausgeführten Abdeckung in einem Längsschnitt;
- Fig. 2b: eine Detailansicht einer weiteren Ausführungsform eines Einsatzes zur Anbindung einer als Folie ausgeführten Abdeckung gemäß Fig. 2a in einem Längsschnitt;
- Fig. 2c: eine Detailansicht des Einsatzes gemäß Fig. 2b mit einer als Kunststoffplatte ausgeführten Abdeckung;
- Fig. 3a: eine Draufsicht auf die Kartusche aus Figur 1 mit dem Sollbruchbereich;
- Fig. 3b: eine Draufsicht auf die Kartusche aus Figur 1 mit einer weiteren Ausführungsform des Sollbruchbereichs
- Fig. 4: einen schematischen Vergleich, der die Kammer aus Figur 1 mit einer aus dem Stand der Technik bekannten Kammer und deren Auspressverhalten vergleicht;
- Fig. 5: eine schematische Darstellung des erfindungsgemäßen Verfahrens zur Herstellung einer erfindungsgemäßen Kartusche in einer zweiten Ausführungsform;
- Fig. 6: eine vereinfacht gezeigte Kartusche und eine Füllvorrichtung zur Befüllung einer Kammer der Kartusche gemäß Fig. 1 mit einer chemischen Masse;
- Fig. 7: einen Längsschnitt durch und eine Draufsicht auf eine Ausgestaltung des Einsatzes;
- Fig. 7a -: 7cschematische Draufsichten auf weitere Ausgestaltungen des Einsatzes;
- Fig. 8: eine Draufsicht auf eine weitere Ausgestaltung des Einsatzes;
- Fig. 9: eine Detailansicht eines Entlüftungsschlitzes des Einsatzes aus Figur 8;
- Fig. 10: eine Draufsicht auf eine weitere Ausgestaltung des Einsatzes;
- Fig. 11: eine Detailansicht einer Entlüftungseinkerbung des Einsatzes aus Figur 10;
- Fig. 12: eine alternativ ausgeführte Kartusche, bei der ein Folienschlauch und ein Bodenteil miteinander verschweißt sind;
- Fig. 13a: einen schematisch gezeigten Aufbau der Abdeckung;
- Fig. 13b: einen schematischen Aufbau einer alternativ ausgeführten Abdeckung;
- Fig. 14: einen schematischen Aufbau einer weiteren alternativ ausgeführten Abdeckung;
- Fig. 15 - 19: Ausschnitte von verschiedenen Ausführungen von Abdeckungen, die sich über die jeweilige Ausführung des Sollbruchbereichs voneinander unterscheiden;
- Fig. 20: eine Seitenansicht und eine Draufsicht einer weiteren Ausführungsform einer Kartusche mit zwei Folienbeuteln, wobei die Folienbeutel in einem Schweißverfahren gemeinsam mit dem Kopfteil verbunden sind; und
- Fig. 21: eine Seitenansicht und eine Draufsicht einer weiteren Ausführungsform einer Kartusche mit zwei Folienbeuteln, wobei die Folienbeutel in einem Schweißverfahren separat mit dem Kopfteil verbunden sind.

### Ausführungsbeispiele:

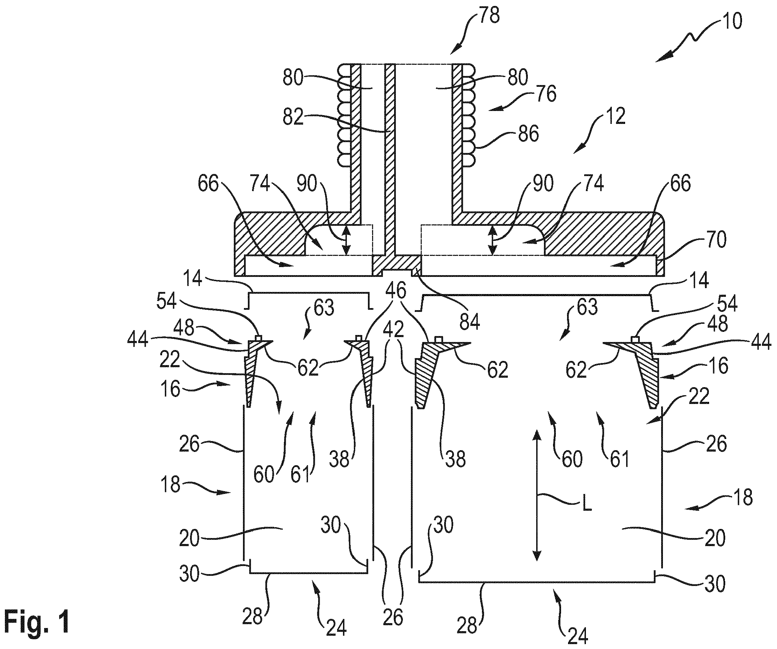

Figur 1 zeigt eine Kartusche 10 in einer Explosionsdarstellung in einem Längsschnitt.

Die Kartusche 10 umfasst ein Kopfteil 12, zwei Abdeckungen 14, zwei Einsätze 16 und zwei Folienbeutel 18.

Die Folienbeutel 18 sind nicht eigensteif ausgeführt und weisen jeweils eine zylindrische und im Wesentlichen längliche Form auf. Die Folienbeutel 18 begrenzen jeweils eine Kammer 20 und weisen eine Öffnung 22 auf, wobei die Kammer 20 von den Folienbeutels 18 insbesondere dichtend verschließbar ist.

In der gezeigten Ausgestaltung ist der Folienbeutel 18 durch ein Bodenteil 24 und einen Folienschlauch 26 gebildet. Das Bodenteil 24 weist eine Grundfläche 28 und einen um die Grundfläche 28 umlaufenden Kragen 30 auf. Der Folienschlauch 26 ist außenseitig an dem Kragen 30 durch Verschweißen oder Kleben befestigt. Grundsätzlich kann der Folienschlauch 26 auch innenseitig an dem Kragen 30 durch Verschweißen oder Kleben befestigt sein.

Der Folienschlauch 26 kann beispielsweise aus einer Folie durch Verkleben oder Verschweißen von Randbereichen hergestellt sein. Es kann auch vorgesehen sein einen bereits vorgefertigten Folienschlauch bzw. einen vorgefertigten Folienbeutel zu verwenden.

Die Grundfläche 28 ist beispielsweise kreisförmig, sodass die Kammer 20 zylinderförmig ausgestaltet ist. Prinzipiell ist jedoch jede beliebige Form der Grundfläche 28 denkbar, beispielsweise rechteckig bzw. polygonal.

Der Einsatz 16 ist jeweils eigensteif ausgebildet und innenseitig durch die Öffnung 22 zumindest teilweise in die entsprechende Kammer 20 eines zugeordneten Folienbeutels 18 eingesetzt.

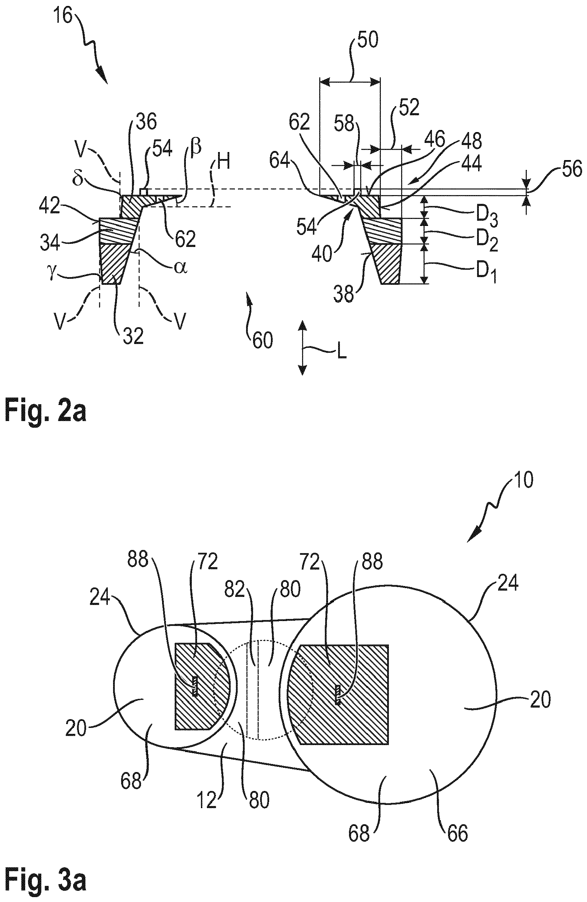

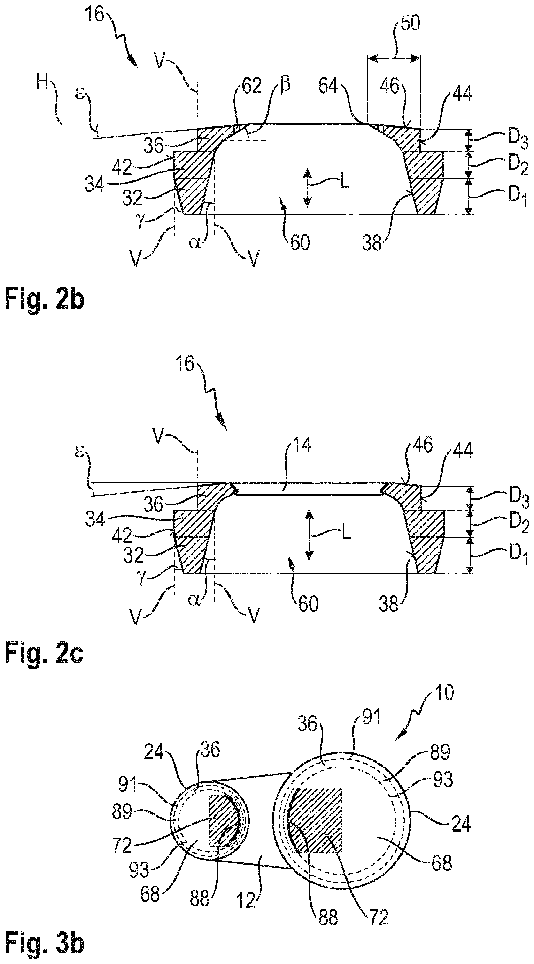

Fig. 2a, Fig. 2b und Fig. 2c zeigen verschiedene Ausführungsvarianten eines Einsatzes 16 bzw. einer Abdeckung 14, wobei die Einsätze 16 jeweils zur Anbindung an einen Folienbeutel 18 vorgesehen sind.

Der Einsatz 16 gemäß Fig. 2a weist einstückig drei Abschnitte 32, 34 und 36 auf, die bezüglich einer Längsrichtung L des Folienbeutels 18 bzw. der Kartusche 10 aufeinander angeordnet sind, also jeweils aneinander anschließen. Der erste Abschnitt 32, ist dabei auf einer dem Kopfteil 12 abgewandten Seite und der dritte Abschnitt 36 auf einer dem Kopfteil 12 zugewandten Seite angeordnet. Der erste Abschnitt 32 hat beispielsweise eine Dicke D1 in Längsrichtung L von insbesondere kleiner 4 mm, der zweite Abschnitt 34 eine Dicke D2 in Längsrichtung L von insbesondere kleiner 5 mm und der dritte Abschnitt 36 eine Dicke D3 in Längsrichtung L von insbesondere kleiner 5 mm.

Eine der Kammer 20 zugewandte Innenseite 38 der ersten zwei Abschnitte 32 und 34 und eines ersten Bereichs des dritten Abschnitts 36, der sich vom Übergang des zweiten Abschnitts 34 zum dritten Abschnitt 36 zu einem Knick 40 erstreckt, weist gegenüber einer Vertikalen V einen Winkel α auf, der Werte von 0 bis 45° annehmen kann. Hierdurch verjüngt sich die Kammer in Richtung des Kopfteils 12.

Die Innenseite 38 des dritten Abschnitts 36 weist auf einer dem Kopfteil 12 zugewandten Seite oberhalb des Knicks 40 einen zweiten Bereich auf, der gegenüber einer senkrecht zu der Längsachse L angeordneten Horizontalen H einen Winkel β aufweist. Der Winkel β kann einen Wert zwischen 0° und 60° aufweisen.

Der dritte Abschnitt 36 hat eine der Kammer 20 abgewandte Außenseite 42, die zwei Flächen 44 und 46 umfasst. Die Fläche 46 ist im Längsschnitt parallel zu der Horizontalen H und damit zu der Grundfläche 28 angeordnet, wohingegen die Fläche 44 im Längsschnitt einen Winkel δ gegenüber der Vertikalen bzw. der Längsrichtung aufweist, bei einer alternativen Ausführung aber auch im Wesentlichen parallel zu der Vertikalen V angeordnet sein kann.

Dementsprechend können die Flächen 44 und 46 in dem Längsschnitt im Wesentlichen senkrecht zueinander angeordnet sein.

Fig. 2b zeigt eine weitere Ausführungsform des Einsatzes 16, der sich von dem Einsatz 16 gemäß Fig. 2a im Wesentlichen dadurch unterscheidet, dass der dritte Abschnitt 36 einen die Fläche 46 umfassenden und dem Kopfteil 12 zugewandten konusförmigen Bereich aufweist. Die dem Kopfteil 12 zugewandte Fläche 46 schließt mit der Horizontalen H einen Winkel ε von 10-50°, besonders bevorzugt von etwa 15° - 35° ein. Die Flächen 44 und 46 sind in dem Längsschnitt nicht senkrecht zueinander angeordnet und schließen hier einen stumpfen Winkel ein. Weiterhin ist die radial äußere Fläche 42 des dritten Abschnitts 36 im Wesentlichen in Längsrichtung L angeordnet.

Der in Fig. 2c gezeigte Einsatz 16 entspricht im Wesentlichen dem Einsatz 16 gemäß Fig. 2b, wobei die Abdeckung 14 im gezeigten Ausführungsbeispiels als Kunststoffplatte ausgeführt ist.

Der dritte Abschnitt 36 der Einsätze 16 gemäß Fig. 2a und 2b ist in Bezug auf die Außenseite 42 gegenüber dem zweiten Abschnitt 34 zurückgesetzt, wobei der dritte Abschnitt 36 einen geringeren Außendurchmesser als der zweite Abschnitt 34 aufweist. Hierdurch wird eine stufenförmig abgesetzte Erhebung 48 des Einsatzes 16 ausbildet.

Der dritte Abschnitt 36 weist in Richtung der Horizontalen H eine Breite 50 von 3 bis 8 mm auf und ist um einen radialen Versatz 52 von 2 bis 4 mm gegenüber dem zweiten Abschnitt 34 nach innen versetzt.

Auf der nach dem Kopfteil 12 zugewandten und somit nach oben gewandten Fläche 46, die im Wesentlichen parallel zur Horizontalen H ist, ist ein Materialfortsatz 54 vorgesehen, der im Wesentlichen senkrecht von der zur Horizontalen H parallelen Fläche 46 absteht, also in Längsrichtung L. Der Materialfortsatz 54 hat eine vordefinierte Höhe 56, wie nachfolgend noch erläutert wird, und eine Breite 58 von insbesondere kleiner 2 mm.

Die Außenseite 42 des ersten Abschnitts 32 hat gegenüber der Vertikalen V einen Winkel γ zwischen 0 und 10° und die Außenseite 42 des dritten Abschnitts 36 schließt mit der Längsrichtung L einen Winkel δ von 0 bis 60° ein.

Die der Kammer 20 zugewandte Innenseite 38 der Abschnitte 32, 34, 36 umschließt einen Durchgang 60, der ausgehend vom ersten Abschnitt 32 in Richtung zum dritten Abschnitt 36 konisch zulaufend ist. Insofern hat der Durchgang 60 im Bereich des ersten Abschnitts 32 eine größere Öffnung 61 im Vergleich zur Öffnung 63 im Bereich des dritten Abschnitts 36.

Zudem hat der Einsatz 16 im dritten Abschnitt 36 mehrere Löcher 62, die zwischen dem Materialfortsatz 54 und einer radial nach innen weisenden Spitze 64 des dritten Abschnitts 36 angeordnet sind und hier im Wesentlichen in Längsrichtung L verlaufen.

Grundsätzlich ist der Einsatz 16 ringförmig ausgebildet, sodass er mit dem zylinderförmigen Folienschlauch 26 gekoppelt werden kann.

Die Innenseite des Folienschlauchs 26 ist mit dem Einsatz 16 verbunden, wobei der Folienschlauch 26 mit der Außenseite 42 des ersten Abschnitts 32 verbunden ist. Vorzugsweise ist der Folienschlauch 26 an dem Einsatz 16 angeschweißt oder angeklebt.

Zwischen dem Kopfteil 12 und dem Einsatz 16 ist die Abdeckung 14 vorgesehen, wie aus Fig. 1 hervorgeht. Die Abdeckung 14 liegt im zusammengebauten Zustand der Kartusche 10 in radial äußeren Bereichen an der stufenförmigen Erhebung 48 im Wesentlichen an den beiden Flächen 44 und 46 an.

Die Abdeckung 14 ist beispielsweise durch Schweißen oder Kleben mit dem Einsatz 16 verbunden und verschließt den Durchgang 60 sowie die Löcher 62. Dementsprechend verschließt die Abdeckung 14 die Kammer 20, so dass die Kammer 20 in montiertem Zustand der Abdeckung 14 vorzugsweise vollständig abgedichtet ist.

In der in Fig. 1 dargestellten Ausführungsform weist das Kopfteil 12 zwei Aufnahmen 66 auf, die in montiertem Zustand mit den Einsätzen 16 und der Abdeckung 14 zusammenwirken. Die Aufnahme 66 ist in zwei Bereiche geteilt, wie auch aus der Fig. 3a zu entnehmen ist.

In einem Auflagebereich 68 ist die Aufnahme 66 an den Einsatz 16 und die stufenförmig abgesetzte Erhebung 48 angepasst, sodass der Einsatz 16, wie in Fig. 1 ersichtlich ist, mit der Abdeckung 14 an einer Seitenfläche 70 der Aufnahme 66 anliegt, also über seine nach radial außen weisende Außenseite 42, insbesondere die des dritten Abschnitts 36, und, wie in Fig. 3a ersichtlich ist, auf dem Auflagebereich 68 aufliegt, wobei die Abdeckung 14 dazwischenliegt.

Weiterhin umfasst die Aufnahme 66 einen Ausdehnungsbereich 72, der als Vertiefung in der Aufnahme 66 ausgeführt ist und, wie in Fig. 1 ersichtlich ist, einen Ausbreitungsraum 74 bildet, dessen Funktion später noch erläutert wird.

Das Kopfteil 12 weist weiterhin einen Austrittsstutzen 76, mit einer Austrittsöffnung 78 und einem Austrittskanal 80, auf. Die Austrittsöffnung 78 steht durch den Austrittskanal 80 mit dem Ausbreitungsraum 74 und der Aufnahme 66 in Fluidverbindung.

Der in Fig. 1 dargestellte Austrittsstutzen 76 weist zwei Austrittskanäle 80 auf, die mit der jeweiligen Aufnahme 66 in Fluidverbindung stehen und durch eine Trennwand 82 voneinander getrennt sind, die sich von einem die Aufnahmen 66 trennenden Verbindungssteg 84 bis zu der Austrittsöffnung 78 erstreckt.

Es kann vorgesehen sein, dass die beiden Austrittskanäle 80, wie in Fig. 1 und Fig. 3a dargestellt, einen unterschiedlichen Querschnitt haben, insbesondere einen unterschiedlichen Durchmesser, um ein Mischungsverhältnis der Massen einzustellen, wie nachfolgend noch erläutert wird.

Der Austrittsstutzen 76 weist ferner ein Gewinde 86 auf, durch das ein nicht ersichtlicher Aufsatz an der Austrittsöffnung 78 des Kopfteils 12 befestigt werden kann. Dieser Aufsatz kann Teil einer Auspressvorrichtung sein, in die die Kartusche 10 eingesetzt bzw. eingelegt werden kann.

Die Abdeckung 14 umfasst einen Sollbruchbereich 88, der im mit dem Kopfteil 12 verbundenen Zustand der Kartusche 10 im Bereich des Ausdehnungsbereichs 72 der Aufnahme 66 angeordnet ist. Die Abdeckung 14 weist vorliegend in dem Sollbruchbereich 88 eine geringere Materialstärke oder Materialfestigkeit als in weiteren Bereichen der Abdeckung auf. Über die geringere Materialstärke ist die Abdeckung 14 in dem Sollbruchbereich 88 entsprechend bereichsweise geschwächt.

Der Sollbruchbereich 88 kann beispielsweise durch einen Laser oder durch einen beheizten Stempel in der Abdeckung 14 erzeugt werden. Der Sollbruchbereich 88 kann beispielsweise nach einer Anordnung der Abdeckung 14 an dem Einsatz 16 vorzugsweise von einer der Kammer 20 abgewandten Seite erzeugt werden. Alternativ oder zusätzlich hierzu kann der Sollbruchbereich 88 auch von einer der Kammer 20 zugewandten Seite der Abdeckung 14 erzeugt werden. Beispielsweise können von beiden Seiten der Abdeckung 14 einander gegenüberliegende Bereiche bearbeitet werden, so dass sich der Sollbruchbereich 88 beidseits der Abdeckung 14 erstreckt. Der Sollbruchbereich 88 kann auch durch eine Verformung von Material mittels eines Stempels oder durch ein Anschmelzen von Material durch einen Stempel erzeugt werden. Es kann auch vorgesehen sein, dass mittels eines Lasers Material im Sollbruchbereich 88 insbesondere an einer der Kammer 20 abgewandten Seite verdampft wird, so dass der Sollbruchbereich 88 beispielsweise eine von außen ersichtliche Einkerbung in der Abdeckung 14 darstellt. Wenn der Sollbruchbereich 88 durch ein Heißprägen hergestellt wird, ist der Sollbruchbereich 88 ebenfalls von einer Außenseite sichtbar. Der Sollbruchbereich 88 kann auch durch ein Anritzen hergestellt werden. Der Sollbruchbereich 88 kann auch vor dem Anbringen der Abdeckung 14 auf den Einsatz 16 durch die genannten Verfahren erzeugt werden.

Fig. 3b zeigt eine vergleichbare Ansicht wie Fig. 3a, wobei im Folgenden lediglich auf die Unterschiede eingegangen wird. Der Sollbruchbereich 88 ist hierbei in einem Bereich des Ausdehnungsbereichs 72 angeordnet, der dem jeweils anderen Folienbeutel 18 zugewandt ist. In Fig. 3b ist ein umlaufende Schweißnaht 89 gezeigt, mittels der die Abdeckung 14 an der Fläche 46 des Einsatzes 16 festgelegt ist. Die Schweißnaht 89 ist vereinfacht durch zwei strichliert gezeigte hier im Wesentlichen konzentrisch zu einer Längsachse des Folienbeutels 18 verlaufende Kreise 91, 93 begrenzt, wobei die Schweißnaht 89 hier einen Teilbereich der Fläche 46 darstellt. Der Sollbruchbereich 88 stellt vorliegend beispielsweise einen Ausschnitt der Schweißnaht 89 dar, wobei der Sollbruchbereich 88 zumindest bereichsweise, insbesondere vollständig deckungsgleich zu der Schweißnaht 89 ist. Alternativ hierzu kann sich der Sollbruchbereich 88 auch in unmittelbaren Nachbarschaft zu der Schweißnaht 89 befinden. Der Sollbruchbereich 88 wird während der Herstellung der Schweißnaht 89 durch eine Variation von Schweißparametern erzeugt.

Der Sollbruchbereich 88 ist eine gezielte Schwächung der Abdeckung 14, sodass sich beim Auspressen des Folienbeutels 18 bzw. der Kammer 20 durch eine Auspressvorrichtung die Abdeckung 14 im Sollbruchbereich 88 aufreißt bzw. sich dort in definierter Weise öffnet.

Während des Auspressens der Kartusche 10 wird das Bodenteil 24 der Kammer 20 beispielsweise mittels eines Stempels einer Auspressvorrichtung in Richtung des Kopfteils 12 gedrückt. Dies führt dazu, dass sich der Druck in der Kammer 20 erhöht, der in Richtung zur Abdeckung 14 gerichtet ist, wodurch die in der Kammer 20 befindliche Masse gegen die Abdeckung 14 gedrückt wird. Die Abdeckung 14 dehnt sich daraufhin in den Ausdehnungsbereich 72 aus. Der Sollbruchbereich 88 der Abdeckung 14 ist dem Ausdehnungsbereich 72 zugeordnet, wobei der Sollbruchbereich 88 oberhalb einer bestimmten Kraft bzw. eines entsprechenden Drucks aufbricht, sodass die Masse durch den Durchgang 60 des Einsatzes 16 und den aufgerissenen Sollbruchbereich 88 aus der Kammer 20 in den Austrittskanal 80 fließen kann. Die Masse kann somit aus dem Kopfteil 12 heraus durch die Austrittsöffnung 78 fließen und beispielsweise auf einem Objekt aufgetragen werden.

Dadurch, dass nach einem vollständigen Auspressen der Kammer 20 die Masse, die sich im Ausbreitungsraum 74 und im Austrittskanal 80 befindet, nicht weiter aus der Austrittsöffnung 78 hinausgedrückt werden kann, sollten der Austrittskanal 80 und der Ausbreitungsraum 74 möglichst klein gehalten werden.

Es hat sich als vorteilhaft herausgestellt, wenn der Ausdehnungsbereich 72, der der Kammer 20 zugeordnet ist, eine Fläche von 1 - 40% bezogen auf die Gesamtfläche der jeweiligen Aufnahme 66 bzw. 68, besser 2 - 35% und bevorzugt 3 - 30% aufweist. Die Dehnungshöhe 90 des Ausbreitungsraums 74 sollte zwischen 2,0 und 15,0 mm, insbesondere 3,0 und 12,0 mm und bevorzugt 5,0 und 10,0 mm sein.

Die zum Aufbrechen des Sollbruchbereichs 88 notwendige Öffnungskraft kann durch eine Veränderung des Ausdehnungsbereichs 72 angepasst werden. Des Weiteren ist es auch möglich, die Öffnungskraft durch eine entsprechende Anordnung des Sollbruchbereichs 88 auf der Abdeckung 14 bzw. die Formgebung und die Größe des Sollbruchbereichs 88 anzupassen.

Beispielsweise wird die benötigte Öffnungskraft vergrößert, wenn der Sollbruchbereich 88 aus einem mittigen Bereich in einem Randbereich der Ausdehnungsfläche 72 verlagert wird.

Der Ausdehnungsbereich 72 und der Sollbruchbereich 88 sind so gewählt, dass die zwei Kammern 20 im Wesentlichen bei einer identischen Öffnungskraft aufbrechen, sodass die Massen aus den Kammern 20 synchron hinausfließen können. Dementsprechend kann ein vorbestimmtes Mischverhältnis der Massen aus den beiden Kammern 20 realisiert werden, welches durch ein Flächenverhältnis der Grundflächen 28 bzw. der Aufteilung des Austrittkanals 80 durch die Trennwand 82 vorgegeben ist.

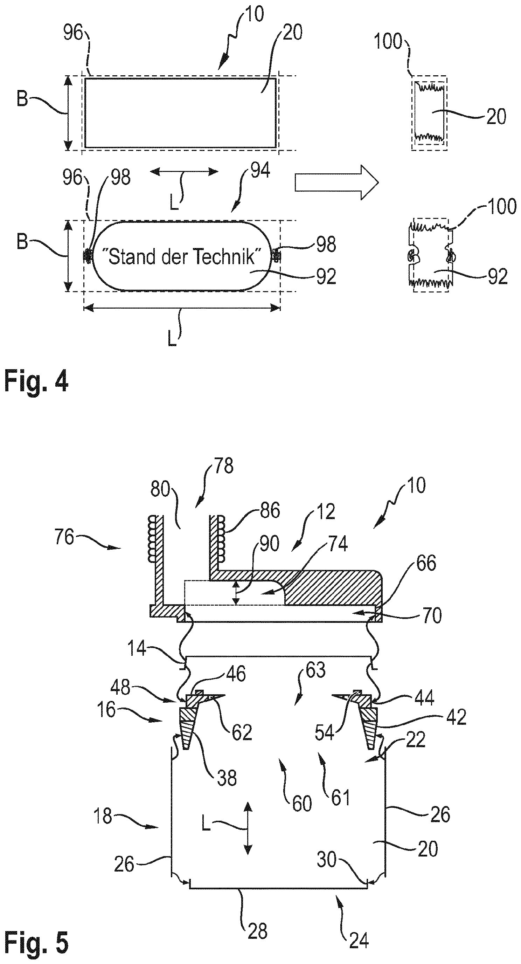

Fig. 4 zeigt einen schematischen Vergleich zwischen der Kammer 20 der Kartusche 10, die in der oberen Hälfte der Fig. 4 angeordnet ist, und einer Kammer 92 einer aus dem Stand der Technik bekannten Kartusche 94, die in der unteren Hälfte der Figur angeordnet ist, in einem Längsschnitt.

Die linke Seite der Fig. 4 stellt die Kartuschen 10, 94 in einem befüllten Zustand dar und die rechte Seite der Fig. 4 die Kartuschen 10, 94 in einem ausgepressten bzw. entleerten Zustand.

Im befüllten Zustand sind die Kartuschen 10, 94 im vorliegenden Beispiel durch einen volumengleichen Quader 96 umschlossen, der mit gestrichelten Linien gezeigt ist. Eine Breite B, eine Länge L und eine nicht gezeigte Höhe der beiden Quader 96 sind hier im Wesentlichen gleich.

Die Kammer 92 der Kartusche 94 aus dem Stand der Technik ist an beiden Seiten durch Clips 98 verschlossen. Die Clips 98 führen dazu, dass die Kammer 92 jeweils endseitig kugelförmig geschlossen ist, sodass die Kammer 92 ein geringeres Volumen aufweist als der Quader 96 gemäß der erfindungsgemäßen Kartusche 10. Dementsprechend kann mehr Masse in die Kammer 20 eingefüllt werden als in die Kammer 92.

Das durch einen Pfeil dargestellte Auspressen der Kartuschen 10, 94 führt dazu, dass die Längsseiten der Kammern 20, 92 zusammengedrückt werden und sich ziehharmonikaartig wölben.

Die Kammer 20 der ausgepressten Kartusche 10 ist durch einen Quader 100 umschlossen. Der Quader 100 ist kleiner als der Quader, der die ausgepresste Kammer 92 aus dem Stand der Technik umschließt, sodass die ausgepresste Kammer 20 ein kleineres Volumen als die ausgepresste Kammer 92 des Stands der Technik hat. Dementsprechend kann die Kartusche 10 bei gleichem zur Verfügung stehenden Ausgangsvolumen gemäß Quader 96 mehr Masse aufnehmen als die aus dem Stand der Technik bekannte Kartusche 94 und es verbleibt weniger Masse in der Kartusche 10 nach dem Auspressen verglichen mit der Kartusche 94 aus dem Stand der Technik.

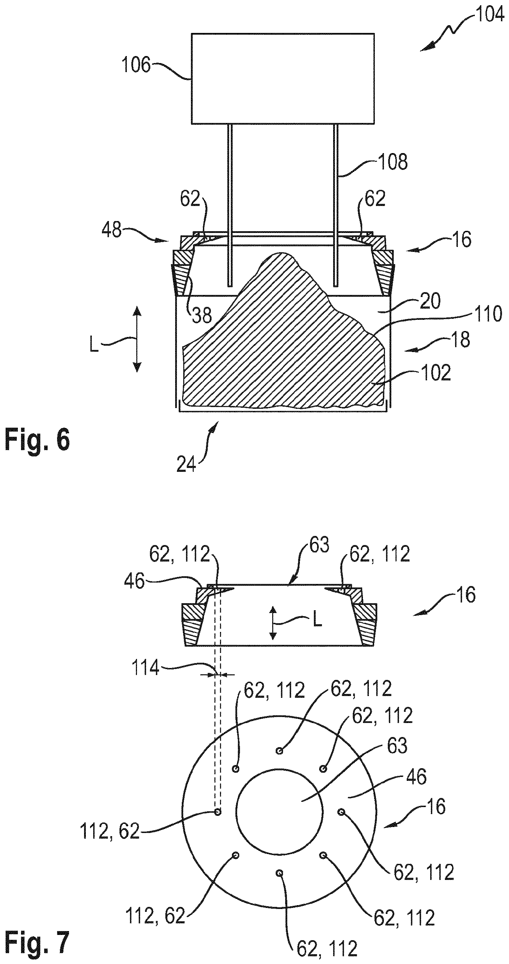

Anhand von Fig. 5 und Fig. 6 wird nun das Verfahren zur Herstellung einer Kartusche 10 gemäß einer weiteren Ausführungsform beschrieben, die im Wesentlichen der oben näher beschriebenen Ausführungsform entspricht, sodass im Folgenden lediglich auf die Unterschiede eingegangen wird. Gleiche Bauteile sind mit denselben Bezugszeichen versehen, und es wird hinsichtlich ihres Aufbaus und ihrer Funktion auf die obigen Erläuterungen verwiesen.

Im Unterschied zur ersten Ausführungsform weist die Kartusche 10 in Figur 5 nur eine Kammer 20 auf, sodass auch nur ein Einsatz 16, eine Abdeckung 14, eine Aufnahme 66 und ein Austrittskanal 80 vorhanden sind. Dementsprechend ist auch keine Trennwand 82 vorgesehen, die den Austrittskanal 80 in Teilkanäle unterteilt.

In einem ersten Verfahrensschritt, die Schritte sind durch Pfeile dargestellt, werden das Bodenteil 24 und der Einsatz 16 bereitgestellt. Anschließend wird umfangsseitig bzw. umfänglich um das Bodenteil 24 ein Folienschlauch 26 außenseitig an dem Kragen 30 befestigt, beispielsweise durch Verkleben oder Verschweißen, sodass ein Folienbeutel 18 entsteht, der eine Öffnung 22 aufweist. Der Folienschlauch 26 kann auch innenseitig an dem Kragen 30 befestigt werden.

Die Innenseite der Öffnung 22 wird anschließend an der Außenseite 42 des Einsatzes 16 im Bereich des ersten Abschnitts durch Verschweißen und/oder Verkleben befestigt.

In einem nächsten, in Fig. 6 ersichtlichen Schritt wird die Kammer 20 mit einer Masse 102 durch eine Füllvorrichtung 104, die einen Füllkopf 106 und ein Füllrohr 108 aufweist, befüllt. Der Füllkopf 106 und das Füllrohr 108 stehen in Fluidverbindung miteinander.

Der Füllkopf 106 ist beispielsweise mit einem Reservoir der Masse 102 verbunden und pumpt die Masse 102 aus dem Reservoir in den Füllkopf 106. Das Füllrohr 108 ragt durch die Öffnung 63 und den Durchgang 60 des Einsatzes 16 in die Kammer 20 hinein, sodass die Masse 102 aus dem Füllkopf 106 durch das Füllrohr 108 in die Kammer 20 eingebracht werden kann.

Während des Füllvorgangs kann die in der Kammer 20 befindliche Luft durch die Löcher 62 entweichen, sodass das Füllrohr 108 den gleichen Querschnitt wie die Öffnung 63 des dritten Abschnitts 36 des Einsatzes 16 haben kann. Die Masse 102 kann damit durch eine große Öffnung in die Kammer 20 eingebracht werden, sodass für den Füllvorgang wenig Druck vonnöten ist.

Die Geometrie des Einsatzes 16 ist an einen Füllkegel 110 der chemischen Masse 102 angepasst. Die Geometrie ist insbesondere an den Füllkegel 110 von viskosem chemischen Mörtel angepasst. Es wird somit erreicht, dass verhältnismäßig wenig und insbesondere keine Luft zwischen dem Einsatz 16 und der chemischen Masse 102 nach dem Füllvorgang vorhanden ist. Dies ist vorteilhaft, da das Vorhandensein von Luft die Haltbarkeit der Masse 102 verringern kann und sich bei größeren Luftblasen in unerwünschter Weise auf das bei der Verwendung von zwei Folienbeuteln 18 erzielte Mischungsverhältnis auswirken kann.

Nach dem Füllvorgang wird, wie in Fig. 5 gezeigt, die Abdeckung 14 auf dem Einsatz 16 befestigt.

Um die Öffnung 63 dicht verschließen zu können, kann ein hier umlaufend ausgeführter und mit dem dritten Abschnitt 36 des Einsatzes 16 verbundener Materialfortsatz 54 vorgesehen sein, der ringförmig ausgeführt sein kann. Es können auch mehrere separate Materialfortsätze 54 vorgesehen sein, die beispielsweise teilringförmig ausgebildet sind und sich jeweils lediglich über einen Teilbereich des Umfangs des Einsatzes 16 erstrecken. Der wenigstens eine Materialfortsatz 54 dient als Schmelzstelle, sodass die Abdeckung 14 und der Einsatz 16 einstückig, insbesondere stoffschlüssig miteinander verbunden werden können, indem der Materialfortsatz 54 aufgeschmolzen wird.

Des Weiteren ist die Abdeckung 14 auch an den Flächen 44 und 46 des Einsatzes 16 befestigt. Beispielsweise fließt das geschmolzene Material des Materialfortsatzes 54 entlang der Flächen 44, 46, um eine Art Klebeschicht für die Abdeckung 14 auszubilden.

Die Abdeckung 14 kann als Monofolie ausgeführt sein. Nach dem Verschließen des Einsatzes 16 wird an der Oberseite der Abdeckung 14 ein Teil der Abdeckung 14 abgetragen, sodass ein Sollbruchbereich 88 entsteht. Dies geschieht beispielsweise im verschlossenen Zustand der Kammer 20, indem Material der Abdeckung 14 von der Außenseite abgetragen wird.

Bei einem Befestigen der Abdeckung 14 an der Fläche 46 des Einsatzes 16 durch Schweißen kann der Sollbruchbereich 88 durch eine definierte Einstellung der Schweißparameter in einem vordefinierten Bereich gebildet werden. Beispielsweise kann hierbei ein höherer Druck, eine erhöhte Temperatur oder eine verlängerte Schweißdauer oder eine Kombination dieser Parameter vorgesehen sein, um während des Anschweißvorgangs der Abdeckung 14 an den Einsatz 16 den Sollbruchbereich 88 herzustellen. Der Sollbruchbereich 88 kann hierbei auf einfache Weise in unmittelbarer Nähe oder in der Fläche 46 hergestellt werden.

In einem weiteren Verfahrensschritt wird das Kopfteil 12 bereitgestellt und der Einsatz 16 mit der Abdeckung 14 in der Aufnahme 66 befestigt. Insbesondere liegt die Fläche 44 der stufenförmig abgesetzten Erhebung 48 an der Seitenfläche 70 der Aufnahme 66 an. Dieser Verfahrensschritt kann beispielsweise durch Verkleben oder Verschweißen oder einem ähnlichen Befestigungsverfahren erfolgen.

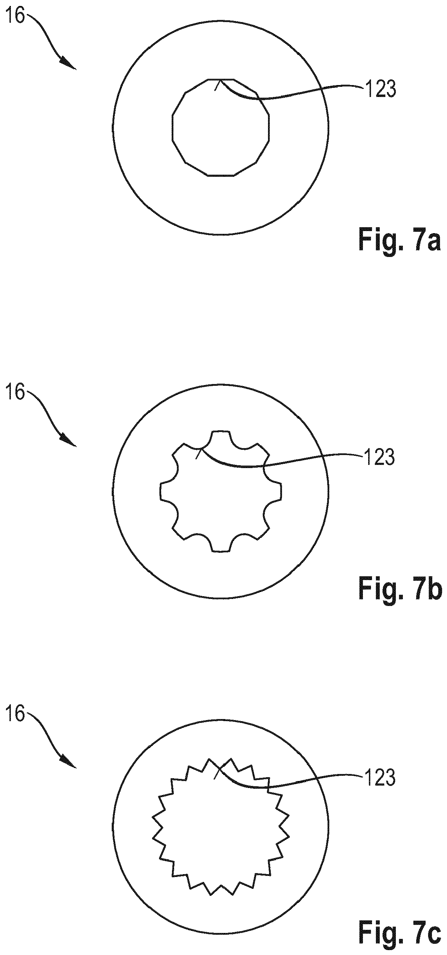

Fig. 7 zeigt in dem oberen Bereich den Einsatz 16 in einem Längsschnitt und in einem unteren Bereich eine entsprechende Draufsicht auf den Einsatz 16.

Aus der Draufsicht gemäß Fig. 7 geht hervor, dass die Löcher 62 als Entlüftungsöffnungen 112 umfänglich um die Öffnung 63 angeordnet sind und einen Durchmesser 114 von insbesondere kleiner 3 mm aufweisen. In der vorliegenden Ausgestaltung hat der Einsatz 16 acht Entlüftungsöffnungen 112. Prinzipiell ist eine beliebige Anzahl an Entlüftungsöffnungen 112 vorsehbar. Die Entlüftungsöffnungen 112 können als Entlüftungsbohrungen ausgeführt sein.

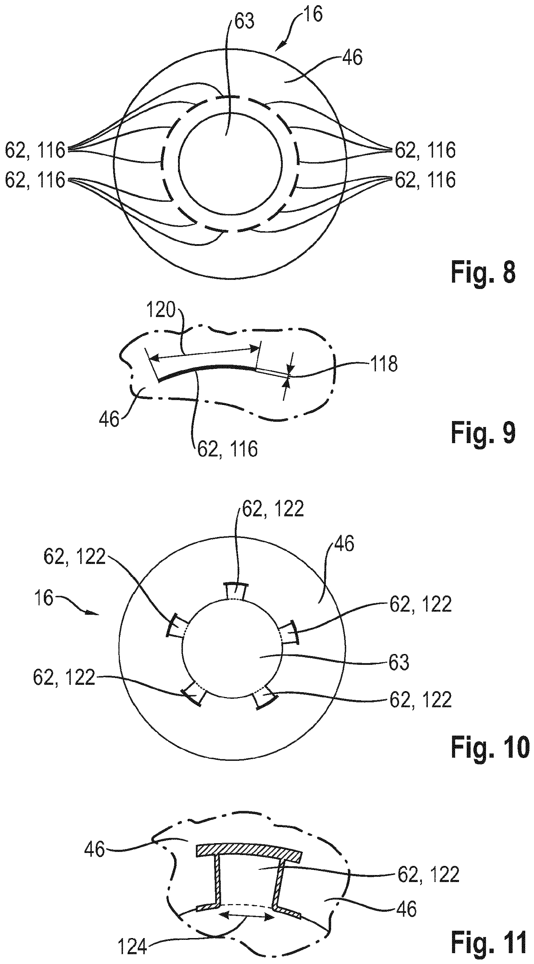

Anhand von Fig. 8 bis Fig. 11 sind weitere Ausgestaltungsformen von Löchern 62 dargestellt.

Die Draufsicht auf den Einsatz 16 gemäß Figur 8 zeigt, dass die Löcher 62 als Entlüftungsschlitze 116 ausgeführt sind, die umfänglich um die Öffnung 63 angeordnet sind, insbesondere in regelmäßigen Abständen zueinander und/oder koaxial zur Mittelachse der Öffnung 63.

Fig. 9 zeigt eine Detailansicht eines der Lüftungsschlitze 116 aus Fig. 8. Eine Breite 118 des Lüftungsschlitzes 116 in radialer Richtung ist insbesondere kleiner als 3 mm und eine Länge 120 in Umfangsrichtung beispielsweise 1 bis 20 mm.

In Fig. 10 ist zu sehen, dass die Löcher 62 auch als Entlüftungseinkerbung 122 ausgeführt sein können. In dieser Ausgestaltung fungieren die Entlüftungseinkerbungen 122 als Vergrößerung der Öffnung 63, deren ursprüngliche Form im Bereich der Entlüftungseinkerbungen 122 gestrichelt eingezeichnet ist.

Eine Detailansicht einer Entlüftungseinkerbung 122 ist in Fig. 11 dargestellt, aus der zu entnehmen ist, dass eine Breite 124 der Entlüftungseinkerbung 122 in Umfangsrichtung einen Wert insbesondere kleiner 4 mm hat.

Fig. 7a, Fig. 7b und Fig. 7c zeigen weitere Ausführungsmöglichkeiten von Einsätzen 16 zur Entlüftung des Folienbeutels 18 bei einem Befüllvorgang. Eine in radialer Richtung innenliegende Kontur 123 des Einsatzes 16 ist hierbei im Unterschied zur Ausführung des Einsatzes 16 gemäß Fig. 1 nicht kreisförmig. In Fig. 7a stellt die innenliegende Kontur 123 ein insbesondere gleichförmiges Vieleck, hier ein Zwölfeck, in Fig. 7b einen Sinuswellenring und in Fig. 7c eine Zahnradgeometrie dar. Hierdurch kann bei einem Befüllvorgang mit einem zylinderförmigen Füllrohr 108 Luft durch die Öffnung 63 entweichen, ohne dass Löcher 62 in dem Einsatz 16 vorgesehen sein müssen. Diese können bei alternativen Ausführungen von Einsätzen 16 zusätzlich vorgesehen sein.

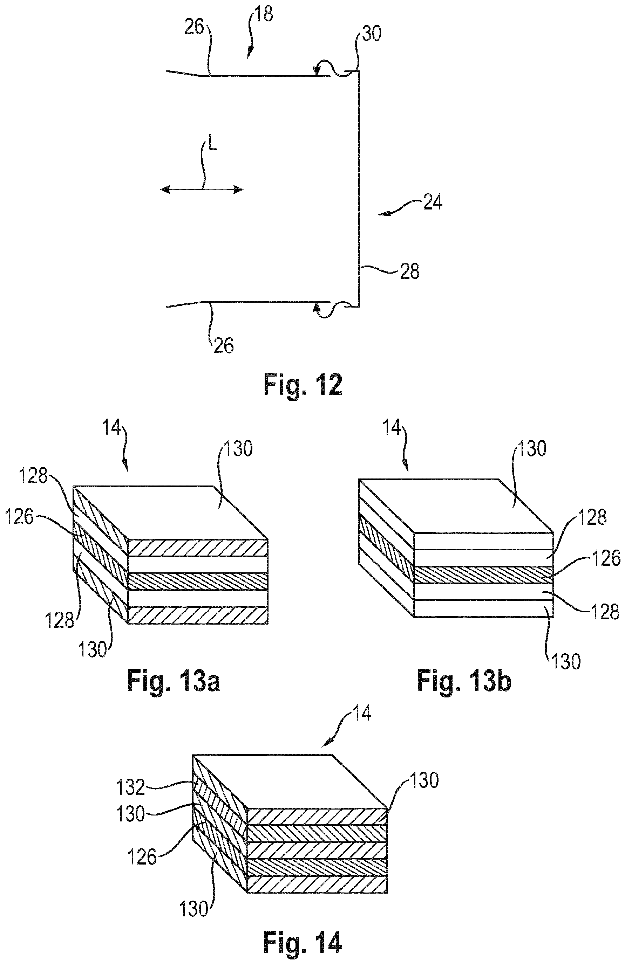

Fig. 12 zeigt eine weitere Möglichkeit den Folienbeutel 18 herzustellen. Anstatt die Außenseite des Kragens 30 an der Innenseite des Folienschlauchs 26 zu befestigen, kann auch die Innenseite des Kragens 30, wie bereits erläutert, an der Außenseite des Folienschlauchs 26 befestigt werden.

Die Abdeckung 14 kann als Monofolie ausgeführt sein. Anhand von Fig. 13a, Fig. 13b und Fig. 14 werden Ausgestaltungen der Abdeckung 14 gezeigt, in denen die Abdeckung 14 durch mehrere Schichten oder durch eine Kunststoffplatte gebildet ist.

In der Fig. 13a umfasst die Abdeckung 14 fünf Schichten. Eine mittlere Schicht ist als Sperrschicht 126 beispielsweise in Form einer Aluminiumschicht ausgeführt. Eine Nummerierung der Schichten wird in den Figuren jeweils von oben nach unten vorgenommen, so dass die oberste Schicht eine erste Schicht und eine unterste Schicht eine fünfte Schicht darstellt. Eine zweite Schicht und eine vierte Schicht sind jeweils als Polyethylen-Schicht (PE-Schicht) 128 ausgeführt. Die oberste und die unterste Schicht, d. h. die erste Schicht und die fünfte Schicht der Abdeckung 14 sind jeweils als Polypropylen-Schicht (PP-Schicht) 130 ausgeführt.

Die Sperrschicht 126 verhindert, dass Wasserdampf und/oder Sauerstoff in die Kammer 20 eindringen kann. Insbesondere bei chemisch aktiven Massen kann Wasserdampf und/oder Sauerstoff dazu führen, dass die in der Kammer 20 angeordnete Masse reagiert und hierdurch deren Haltbarkeit verringert wird bzw. sich deren Zusammensetzung verändert. Zudem kann das in der Kammer 20 befindliche Material aufgrund der Sperrschicht 126 vorteilhafterweise nicht ausgasen.

In Fig. 13b ist ein alternativer Aufbau der Abdeckung 14 mit wiederum fünf Schichten gezeigt. Die mittlere Schicht ist wiederum als Sperrschicht 126 ausgeführt. Im Unterschied zu der Ausführung gemäß Fig. 13a sind neben der zweiten Schicht und der vierten Schicht 128 auch die erste Schicht und die fünfte Schicht 130 aus Polyethylen gebildet.

Die Ausgestaltung der Abdeckung 14 in Fig. 14 weist wiederum fünf Schichten auf, wobei die Sperrschicht 126 die vierte Schicht bildet. Die erste Schicht, die dritte Schicht und die fünfte Schicht sind in dieser Ausgestaltung jeweils als eine PE-Schicht 130 ausgeführt. Die zweite Schicht 132 stellt eine Schicht 132 aus bi-axial angeordnetem Polypropylen dar.

Alternativ hierzu kann die Abdeckung 14 mit einer insbesondere eigensteif ausgeführten Kunststoffplatte ausgeführt sein, die vorzugsweise PE, PP, PET, PVC, ABS, PA, PLA oder vergleichbare Materialien aufweist. Die Abdeckung 14 ist hierbei wiederum durch Kleben oder Schweißen mit dem Einsatz 16 der Ausführungsform der Fig. 2 oder Fig. 2b mit dem Einsatz 16 verbunden.

Die Ausgestaltungen der Abdeckung 14 gemäß in Fig. 13a, Fig. 13b und Fig. 14 sind nur beispielhaft zu verstehen. Prinzipiell ist jegliches, eingangs genannte Material für eine Schicht der Abdeckung 14 möglich und es ist auch eine beliebige Anzahl an Schichten denkbar.

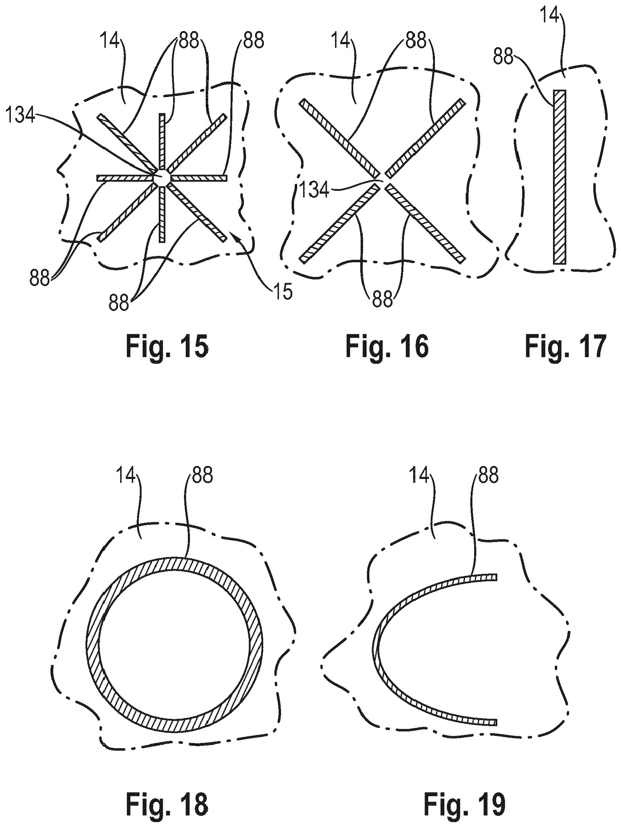

Anhand von Fig. 15 bis Fig. 19 werden im Folgenden verschiedene Ausführungsformen von Sollbruchbereichen 88 gezeigt, die sich hinsichtlich ihrer Form voneinander unterscheiden. In all diesen Figuren ist eine Detailansicht einer Draufsicht auf die Abdeckung 14 gezeigt, wobei der Sollbruchbereich 88 jeweils näher ersichtlich ist.

In Fig. 15 ist der Sollbruchbereich 88 mehrteilig ausgeführt und weist vorliegend acht Teilbereiche auf, die sich jeweils ausgehend von einem Mittelpunkt 134 radial zu dem Mittelpunkt 134 vorliegend im Wesentlichen geradlinig nach außen erstrecken, sodass der Sollbruchbereichs 88 ein sternförmiges Muster bildet. Der Sollbruchbereich 88 stellt somit insgesamt ein symmetrisches, hier punktsymmetrisches Muster dar.

In Fig. 16 weist der Sollbruchbereich 88 vier Teilbereiche auf, die sich wiederum von dem Mittelpunkt 134 im Wesentlichen geradlinig in radialer Richtung nach außen erstrecken, sodass der Sollbruchbereich ein kreuzförmiges Muster darstellt, welches hier punktsymmetrisch zum Mittelpunkt 134 ausgeführt ist.

Der in Fig. 17 gezeigte Sollbruchbereich 88 ist durch einen hier geradlinig verlaufenden Strich gebildet.

In der Ausgestaltung gemäß Fig. 18 ist der Sollbruchbereich 88 durch eine kreisförmige Begrenzung gebildet, die als durchgehende Linie oder als Perforierung ausgeführt sein kann. Die Linie bzw. die Perforierung grenzt den Sollbruchbereich 88 von dem weiteren, außerhalb der Linie bzw. der Perforierung liegenden Bereich der Abdeckung 14 ab.

In der Ausführung gemäß Fig. 19 ist der Sollbruchbereich 88 durch eine im Wesentlichen halbkreisförmig ausgeführte Linie definiert, die wiederum als Perforierung oder durchgehende Linie ausgeführt sein kann.

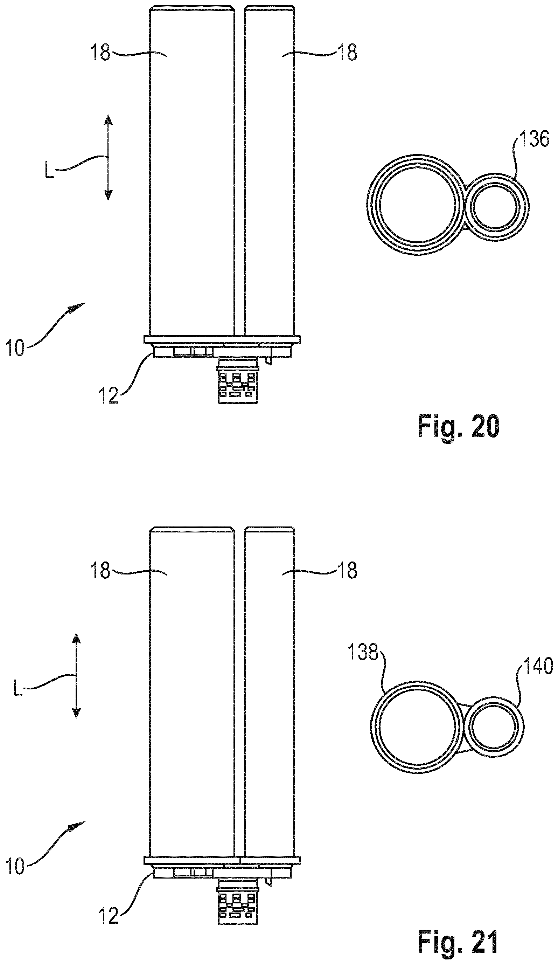

Fig. 20 zeigt eine Seitenansicht und eine Draufsicht einer weiteren Ausführungsform einer Kartusche 10 mit zwei Folienbeuteln 18, wobei die Folienbeutel 18 in einem gemeinsamen Schweißverfahren mit dem Kopfteil 12 verbunden sind. Der eigensteif ausgeführte Einsatz 16 wird dabei zunächst mit dem Folienbeutel 18 verbunden und anschließend mit einer Masse 102 durch den Durchgang 60 befüllt. Wiederum anschließend wird der Durchgang 60 mit der Abdeckung 14 verschlossen, wobei die Abdeckung 14 mit dem Einsatz 16 in oben näher beschriebener Weise angebunden wird und insbesondere angeschweißt wird.

Die Abdeckung 14 ist hier beidseitig schweißbar ausgeführt, so dass in einem weiteren Schritt die Folienbeutel 18 in einem Schweißverfahren an dem Kopfteil 12 angebunden werden. Dies ist in der Ausführung gemäß Fig. 20 für beide Folienbeutel 18 mit einem gemeinsamen Schweißwerkzeug 136 und in der Ausführung gemäß Fig. 21 für jeden Folienbeutel 18 mit zwei separaten Schweißwerkzeugen 138, 140 und somit unabhängig voneinander durchführbar, wobei ein Schweißwerkzeug 138 einem Folienbeutel 18 und das andere Schweißwerkzeug 140 dem anderen Folienbeutel 18 zugeordnet ist.

Hierbei weisen die Einsätze 16 eine entsprechende Gegenkontur zu dem Kopfteil 12 auf, so dass die Einsätze 16 in mit dem Kopfteil 12 verbundenen Zustand über die Abdeckung 14 im Wesentlichen flächig an dem Kopfteil 12 anliegen.

Das jeweilige, in Fig. 20 und Fig. 21 nur schematisch gezeigte Schweißwerkzeug 136, 138, 140 wird von einer dem Kopfteil 12 abgewandten Seite über die Folienbeutel 18 bis zu einem Kontaktbereich des Kopfteils 12 mit dem Einsatz 16 geführt, wobei die Schweißwerkzeuge 138, 140 den jeweiligen Folienbeutel 18 und die entsprechenden Konturen des Einsatzes 16 und des Kopfteils 12 bei der Ausführung gemäß Fig. 21 umfangsseitig vollständig umfassen, so jeweils dass eine umfangsseitig komplett umlaufende Verbindung zwischen dem Kopfteil 12 und dem Folienbeutel 18 über die Abdeckung 14 geschaffen wird. Die Anbindungen der beiden Folienbeutel 18 an das Kopfteil 12 können dabei zeitgleich, teilweise überlappend oder nacheinander durchgeführt werden.

Bei der Ausführung gemäß Fig. 20 umfasst das gemeinsame Schweißwerkzeug 140, mit dem die Anbindung beider Folienbeutel 18 an das Kopfteil 12 in einem einzigen Arbeitsschritt möglich ist, die Folienbeutel 18 umfangsseitig beispielsweise bis auf einen einander zugewandten Bereich der Folienbeutel 18, so dass eine außenseitig um beide Folienbeutel 18 komplett umlaufende Verbindung zwischen dem Kopfteil 12 und den beiden Folienbeuteln 18 über die jeweiligen Abdeckungen geschaffen wird. Hierbei kann es vorgesehen sein, dass keine Verbindung der Einsätze 16 an dem Kopfteil 12 über die Abdeckungen 14 in einem einander zugewandten Bereich der beiden Folienbeutel 18 vorgesehen ist.

Zur Verbindung des Kopfteils 12 mit dem Einsatz 16 oder den Einsätzen 16 ist vorzugsweise ein induktives und kontaktloses Schweißverfahren, beispielsweise ein Hochfrequenzschweißverfahren, vorgesehen. Die Abdeckung 14 weist vorzugsweise eine Aluminiumlage auf, die während des Schweißvorgangs erhitzt wird, wobei die Wärme durch die anderen Schichten der Abdeckung 14 zu den insbesondere aus Kunststoff gefertigten Einsätzen und dem Kopfteil 12 geführt wird und hierdurch die Verschweißung erzielt wird. Hierbei wird ein sehr gezielter Energieeintrag an der Stelle erzielt, an der die Schweißverbindung erstellt werden soll.

Die verschiedenen Ausgestaltungen der einzelnen Bauteile sind beispielhaft zu verstehen. Insbesondere lassen sich die verschiedenen Ausgestaltungen und verschiedenen Merkmale der Ausführungsformen beliebig miteinander kombinieren. Die als Unterschiede aufgezählten Merkmale und Ausgestaltungen sind unabhängig und können in verschiedener Weise kombiniert werden.

In den dargestellten Ausführungsformen umfasst die Kartusche 10 ein oder zwei Kammern 20 und eine entsprechende Anzahl an Abdeckungen 14, Einsätzen 16, Folienbeuteln 18, Aufnahmen 66 und Austrittskanälen 80. Im Allgemeinen ist eine beliebige Anzahl der genannten Bauteile möglich.

## Patentansprüche

1. Verfahren zur Herstellung einer Kartusche (10) für eine Auspressvorrichtung, mittels der folgenden Schritte:
- Bereitstellen eines eine Kammer (20) aufweisenden Folienbeutels (18) mit einer Öffnung (22), eines Kopfteils (12) und eines eigensteifen Einsatzes (16) mit einem Durchgang (60),
- Verbinden des Einsatzes (16) mit dem Folienbeutel (18),
- Befüllen der Kammer (20) mit einer Masse (102) durch den Durchgang (60),
- Verschließen des Durchgangs (60) mit einer Abdeckung (14),
**dadurch gekennzeichnet, dass** der Einsatz (16) mit dem Kopfteil (12) in einem Schweißvorgang verbunden wird, wobei der Schweißvorgang durch einen Wärmeeintrag in die Abdeckung (14) durchgeführt wird.

2. Verfahren nach Anspruch 1, **dadurch gekennzeichnet, dass** der Einsatz (16) in einem Induktionsschweißvorgang an das Kopfteil (12) angebunden wird.

3. Verfahren nach einem der Ansprüche 1 oder 2, **dadurch gekennzeichnet, dass** ein Schweißwerkzeug zur Durchführung des Schweißvorgangs von einer dem Kopfteil (12) abgewandten Seite der Folienbeutel (18) über die Folienbeutel (18) in Richtung des Einsatzes (16) und des Kopfteils (12) geführt wird.

4. Verfahren nach einem der vorhergehenden Ansprüche, **dadurch gekennzeichnet, dass** das Schweißwerkzeug um einen einzigen Folienbeutel (18) zur Anbindung des diesem Folienbeutel (18) zugeordneten Einsatzes (16) an dem Kopfteil (12) geführt wird.

5. Verfahren nach einem der Ansprüche 1 bis 3, **dadurch gekennzeichnet, dass** das Schweißwerkzeug um wenigstens zwei Folienbeutel (18) gemeinsam zur Anbindung der den beiden Folienbeuteln (18) zugeordneten Einsätzen (16) an dem Kopfteil (12) geführt wird.

6. Verfahren nach einem der vorhergehenden Ansprüche, **dadurch gekennzeichnet, dass** im Bereich der Abdeckung ein definierter Sollbruchbereich hergestellt wird.

7. Verfahren nach Anspruch 6, **dadurch gekennzeichnet, dass** der Sollbruchbereich (88) der Abdeckung (14) mittels eines Lasers, einer Schwächung durch Heißprägen, durch ein Anritzen oder durch einen Anschweißvorgang der Abdeckung (14) an den Einsatz (16) hergestellt ist.

8. Verfahren nach einem der vorhergehenden Ansprüche, **dadurch gekennzeichnet, dass** der Einsatz (16) zumindest ein Materialfortsatz (54), insbesondere ein den Durchgang (60) umgebener Materialfortsatz (54), hat, der während des Verschließens des Durchgangs (60) schmilzt.

9. Kartusche (10) für eine Auspressvorrichtung hergestellt mit einem Verfahren nach einem der Ansprüche 1 bis 8, mit zumindest einem nicht eigensteif ausgebildeten, länglichen Folienbeutel (18), der eine Kammer (20) zur Aufnahme einer Masse (102) aufweist, mit einem Kopfteil (12) zum Zusammenwirken mit dem Folienbeutel (18) und mit einem eigensteif ausgeführten Einsatz (16), wobei der Einsatz (16) auf einer dem Kopfteil (12) zugewandten Seite mit dem Folienbeutel (18) verbunden ist und einen von einer Abdeckung (14) verschlossenen Durchgang (60) aufweist,
**dadurch gekennzeichnet,**
**dass** der Einsatz (16) und das Kopfteil (12) in einander zugewandten Bereichen eine jeweils zusammenwirkende und im Wesentlichen gegengleich ausgeführte Kontur aufweisen, wobei die in dem Bereich der Konturen angeordnete Abdeckung (14) schweißbar ausgeführt ist.

10. Kartusche (10) nach Anspruch 9, **dadurch gekennzeichnet, dass** die Kontur des Einsatzes (16) und des Kopfteils (12) jeweils zwei in einem Winkel zueinander angeordnete Flächen (44, 46) aufweisen.

11. Kartusche (10) nach Anspruch 9, **dadurch gekennzeichnet, dass** die Flächen (44, 46) des Einsatzes (16) und des Kopfteils (12) im Wesentlichen senkrecht zueinander angeordnet sind.

12. Kartusche (10) nach einem der Ansprüche 9 bis 11, **dadurch gekennzeichnet, dass** der Einsatz (16) an seiner dem Kopfteil (12) zugewandten Seite eine stufenförmig abgesetzte Erhebung (48) hat, über die der Einsatz (16) in einer Aufnahme (66) des Kopfteils (12), welches zur Anordnung des Einsatzes vorgesehen ist, aufgenommen ist.

13. Kartusche (10) nach einem der Ansprüche 9 bis 12, **dadurch gekennzeichnet, dass** die Abdeckung (14) einen Sollbruchbereich (88) aufweist.

14. Kartusche (10) nach einem der Ansprüche 9 bis 13, **dadurch gekennzeichnet, dass** der Einsatz (16) auf einer dem Kopfteil (12) zugewandten Seite konusförmig ausgeführt ist.

15. Kartusche (10) nach einem der Ansprüche 9 bis 14, **dadurch gekennzeichnet, dass** der Einsatz (16) zumindest eine von dem Durchgang (60) unabhängige Entlüftungsöffnung (112) und/oder zumindest einen von dem Durchgang (60) unabhängigen Entlüftungsschlitz (116) aufweist und/oder, dass der Durchgang (60) des Einsatzes (16) in einem der Mittelachse des Folienbeutels (18) zugewandten Bereich zumindest eine Entlüftungseinkerbung (122) aufweist.
